## Europäisches Patentamt
## European Patent Office
## Office européen des brevets

(19)

(11) Publication number: **0 195 168**
**B1**

(12) **EUROPEAN PATENT SPECIFICATION**

(45) Date of publication of patent specification: **29.11.89**

(51) Int. Cl.⁴: **G 01 G 9/00, G 01 G 23/01**

(21) Application number: **85400541.0**

(22) Date of filing: **21.03.85**

(54) Basis weight gauge standardizing method and system.

(43) Date of publication of application:
**24.09.86 Bulletin 86/39**

(45) Publication of the grant of the patent:
**29.11.89 Bulletin 89/48**

(84) Designated Contracting States:
**DE FR GB SE**

(56) References cited:
**US-A-3 681 595**
**US-A-3 757 122**
**US-A-3 955 086**

(73) Proprietor: **MEASUREX CORPORATION**
**One Results Way**
**Cupertino, California 95014 (US)**

(72) Inventor: **Hegland, Philip**
**1147 Lockhaven Way**
**San Jose California 95129 (US)**
Inventor: **Chase, Lee**
**18400 Overlook Road 60**
**Los Gatos California 95030 (US)**

(74) Representative: **Mongrédien, André et al**
**c/o SOCIETE DE PROTECTION DES INVENTIONS**
**25, rue de Ponthieu**
**F-75008 Paris (FR)**

Courier Press, Leamington Spa, England.

## Description

The present invention is directed to a method and system of standardizing a basis weight gauge measuring the weight per unit area of a sheet material.

Due to the extreme ambient conditions under which basis weight gauges must operate there is an inherent tendency of the parameters of the gauge to drift. A portion of this drift is due to temperature changes and another portion to dirt buildup in the radiation path of the gauge. Thus, the gauge indication of basis weight must be compensated or standardized.

One method of standardization is disclosed in U.S. Patent 3,681,595 in the name of Dahlin and assigned to Measurex Corporation. The patent teaches a method of standardizing a basis weight gauge for measuring the weight per unit area of a sheet material. The gauge has a radiation source and radiation detector with a gap therebetween for directing radiation along a path toward the material and for detecting the amount of radiation transmitted through the material. The transmitted radiation is a measure of the basis weight of the material substantially in accordance with Beer's law. The gauge as taught in the patent also includes standard means having a predetermined and stable basis weight and movable to be interposed in the radiation path.

The method includes the following steps: (a) providing at least one reference sample of a material having a measured basis weight; (b) placing the reference sample in the gap and obtaining a measurement of the radiation transmitted through the sample; (c) constructing a first calibration curve from the measurement of the material of known basis weight, the curve relating basis weight as a function of transmitted radiation substantially in accordance with Beer's law; (d) constructing a second calibration curve by the simulation of dirt in the radiation path whereby the second curve is displaced from the first curve; (e) placing the standard in the gap and measuring an initial shift due to the dirt simulation; (f) obtaining a function of the calibration curve displacement as a function of one of the two variables of the calibration curves; (g) updating the displacement function for the effect of current ambient conditions including the effects of air density changes due to temperature variation and other temperature effects and dirt buildup in the radiation path including the steps of

(1) scanning offsheet and obtaining a current value of transmitted radiation with no sheet material in the radiation path but with the standard in the path to obtain a current standard shift,

(2) updating the displacement function by relating the current standard shift to the initial standard shift; and

(h) scanning the sheet material and measuring the currsnt transmitted radiation and relating the updated displacement function to the first calibration curve along with such current measurement to obtain a standardized basis weight value.

The method of standardizing according to the patent is suitable for many purposes, but it has certain drawbacks.

For example, in some materials such as biaxially oriented plastic film the basis weight varies significantly across the sheet. In such a case the system described in the patent may not be completely effective.

It is, therefore, an object of the present invention to provide an improved method of standardizing a basis weight gauge.

It is another object of the invention to provide a method as above which is extremely accurate regardless of variations in the basis weight of the sheet being measured.

These objects are reached thanks to the invention defined in the accompanying claims 1, 6.

Brief description of the drawings

Figure 1 is a schematic illustration of certain of the equipment and electronics utilized in the present invention;

Figure 2 shows several curves useful in understanding and practicing the present invention.

Detailed description of the preferred embodiment

During the manufacturing process, a characteristic of a web or sheet material such as paper or plastic can be measured by mounting a radiation detector and a radiation source on a carriage. The carriage scans in a cross direction while the sheet material is moving in a machine or perpenidcular direction to the cross direction. A scanner is provided which includes a framework having a pair of spaced upper and lower parallel beams and which extend laterally across the sheet material which is being produced. Upper and lower gauging heads are provided in a framework and are adapted to travel longitudinally along the framework and transversely across the sheet.

The scanning system will not be described in detail because such systems are known, for example, from the teachings of U.S. Patent 3,681,595, discussed above.

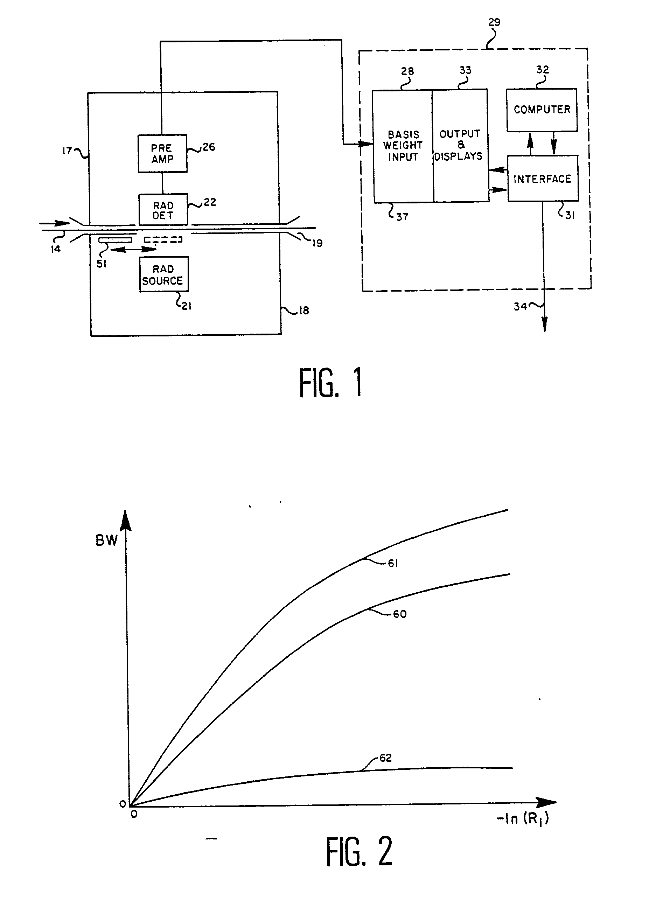

According to the present embodiment, and with reference to Figure 1, paper sheet 14 travels through a gap 19 provided between the gauging heads 17 and 18. The drive for the gauging heads is such that they can be moved offsheet or in other words, off to the side of the sheet during each direction of travel.

The lower gauging head 18 contains a radiation source 21 which emits radiation that is directed along a radiation path toward the paper 14. The radiation can be of the beta, gamma, or x-ray type, and other types of radiation can be appropriate in certain circumstances provided that the radiation is absorbed by the material being measured substantially in accordance with Beer's law. The intensity of radiation which is transmitted through the paper 14 is sensed by a radiation detector 22. In other words, the radiation detector senses the amount of radiation absorbed by the material which gives a direct indication of the basis weight of the material. This is in substantial accordance with Beer's law which is expressed as follows:

$$I = I_o e^{-\mu x} \qquad (1)$$

Where e is the natural log base, $\mu$ is the mass absorption coefficient which is a function of the radiation energy from the source and of the type of material being measured, x is the weight per unit area of the material being measured in terms of milligrams per square centimeter, $I_o$ is the intensity of radiation reaching the radiation detector in the absence of the absorbing material, and I is the intensity of radiation reaching the detector in the presence of the radiation absorbing the material.

Still referring to Figure 1, the radiation source 21 preferably emits beta radiation for the measurement of basis weight. A preamplifier 26 is coupled to the radiation detector 22 to process the radiation events counted by detector 22 and the output of discriminator 26 is coupled to a basis weight input unit 28. The basis weight unit 28 is part of an overall digital processor unit 29 which in conjunction with an interface unit 31 and a computer 32 processes the raw information from the gauging head 17 to provide an input at unit 33 of the actual basis weight of the web, for example, in graphical form. In addition, interface unit 31 has an output at 34 which may be used to control actual parameters of the paper machine or sheet material.

Standard means 51 having a predetermined and stable basis weight is provided which may be selectively interposed in the radiation path between source 21 and detector 22. In practice the standard means can include a polyester disc of a predetermined and stable basis weight which is cemented across a frame. The frame is pivoted for rotation on a shaft which is driven through a universal joint by a rotary solenoid unit. Operation of the standard unit is controlled by the digital processing unit illustrated in Figure 1.

In accordance with the method of the present invention calibration of the basis weight gauge is carried out by first obtaining the curves shown in Figure 2. Such calibration is usually done in the factory and the set of curves shown in Figure 2 is supplied to the customer for his use. Data from these curves are then stored in the on site computer 32 illustrated in Figure 1.

A first calibration curve 60 is obtained by placing several reference samples of sheet material in gap 19 and plotting several points for the curve. As shown in Figure 2 basis weight, BW, is plotted on the vertical axis and the negative of the logarithm of the transmission ratio, $R_1$ is plotted on the horizontal axis.

Thereafter, dirt is simulated in the radiation path, and the same samples are again measured and the results plotted to produce an artificially displaced calibration curve 61. Dirt may be simulated by placing a material in the radiation path, as is done in the preferred embodiment or alternatively by changing the temperature of the air column of the path or by changing the geometry.

Normally when the basis weight gauge is placed in use the calibration curve 60 will be shifted or displaced due to both dirt buildup as discussed above and air temperature or pressure changes. In the present state of the art, however, it cannot be ascertained whether the drift is due exclusively to air temperature, exclusively to dirt buildup, for example, on the window of the radiation source or exactly what proportional share may be due to both effects. However, it has been discovered that drift due to either air temperature or pressure or dirt appear to function or produce equivalent changes. The compensation or standardization for one effect will compensate for the other.

After curves 60 and 61 have been constructed, a standardization curve 62 is constructed by determining the difference between the curves 60 and 61, measured vertically. That is, for a plurality of values of $-1nR$, the basis weight shown on curve 60 is subtracted from the basis weight shown on curve 61, and the differences are used to construct curve 62. In practice the curves 60, 61 and 62 can be plotted by hand, or a computer can be utilized. If a computer is used, an equation is first determined which reasonably represents the curves 60 and 61. Then the measured values of R and BW are input into the computer, which uses a conventional curve-fitting routine to determine the coefficients of the equation corresponding to the measured values. After the coefficients have been determined for the curves 60 and 61, the computer then calculates an equation of the curve 62 representing the difference between curves 60 and 61.

With the foregoing data the basis weight gauge utilizing the present invention has now been fully calibrated. The crucial information contained in the curves of Figure 2 are then stored in the customer's computer and the following use made of this information.

During operation of the system at the customer's facility it is necessary to periodically standardize the system to compensate for the build up of dirt on the gauging heads 17 and 18. The standardization curve 62, stored in the computer, is updated for the effects of current ambient conditions including the effects of air density and dirt buildup in the radiation path. The updating includes scanning offsheet of the material 14 and developing the function DFRAC which is approximately described by:

$$DFRAC = \frac{\ln(FN) - \ln(FC)}{\ln(FD) - \ln(FC)}$$

FN=the standardize transmission ratio

FC=the transmission ratio with the standard in the gap and without the material simulating dirt measured during calibration

FD=the transmission ratio with the standard and with the material simulating dirt in the gap, measured during calibration

After the current value of DFRAC has been computed a correction factor C is calculated where:

$$C = \Delta BW \text{ (DFRAC)}$$

where $\Delta BW$=the difference between curves 60 and 61 corresponding to the present measured value of R, according to the function which represents the standardization curve 62. Then the correction factor, C is applied to the uncorrected, i.e., measured, basis weight to determine a corrected basis weight.

It should be understood that other functions could be used to describe DFRAC.

## Claims

1. A method of standardizing a basis weight gauge for measuring the weight per unit area of a sheet material, such gauge having a radiation source and radiation detector with a gap therebetween for directing radiation along a path towards said material and for detecting the amount of radiation transmitted through said material, said transmitted radiation being a measure of the basis weight of said material, said gauge also including standard means having a predetermined and stable basis weight and movable to be interposed in said radiation path, said method comprising the following steps:

a) constructing two calibration curves each showing basis weight on a first axis versus a function of transmission ratio on a second axis, the first calibration curve being constructed without simulated dirt and the second calibration curve being constructed with simulated dirt;

b) constructing a standardization curve by plotting the displacement of one calibration curve relative to the other; said method being characterized in that it further comprises the following steps;

c) operating the gauge to measure the weight per unit area of the sheet material by determining a measuring transmission ratio;

d) standardizing the gauge during operation, the standardizing step including determining a correction factor, based upon the value of the standardization curve at a point corresponding to the measured transmission ratio.

2. A method according to Claim 1, characterized in that the point corresponding to the measured transmission ratio is the value of the standardization curve at the negative of the natural logarithm of the measured transmission ratio.

3. A method according to either Claim 1 or 2, characterized in that it comprises the following steps:

a) providing a plurality of reference samples each having a measured basis weight;

b) sequentially placing said reference samples in said gap and obtaining measurements of the radiation transmitted through said samples;

c) constructing the first calibration curve from said measurement of said samples, said curve relating the variable, basis weight on a first axis as a function of the transmission ration on the second axis;

d) constructing the second calibration curve by sequentially placing said reference samples and material simulating dirt in said gap and measuring the transmitted radiation;

e) placing said standard means in said gap with said material simulating dirt and without said material simulating dirt and measuring the transmitted radiation in each case;

f) constructing the standardization curve representing the difference between the first calibration curve and the second calibration curve;

g) placing the standard means in the gap without the sheet material in the gap and determining a standardize transmission ratio;

h) placing the sheet material in the gap and measuring the transmitted radiation and removing the sheet material and measuring the radiation to determine a measured transmission ratio and an uncorrected basis weight;

i) determining the correction factor, C, based upon the standardize transmission ratio and upon the value of the standardization curve at the point corresponding to the measured transmission ratio; and

j) applying the correction factor to the uncorrected basis weight to determine a corrected basis weight.

4. A method according to Claim 3, characterized in that the correction factor C is determined by:

a) applying the standardize transmission ratio to the standardization curve to determine the corresponding $\Delta BW$;

b) calculating a DFRAC value according to the following:

$$DFRAC = \frac{\ln(FN) - \ln(FC)}{\ln(FD) - \ln(FC)}$$

where:

FN=the standardize transmission ratio

FC=the transmission ratio with the standard in the gap and without the material simulating dirt measured during calibration

FD=the transmission ratio with the standard and with the material simulating dirt in the gap, measured during calibration.

c) calculating C according to:

$$C = DFRAC \text{ } (\Delta BW)$$

5. A method according to Claim 1, characterized in that it comprises the following steps:

a) determining the values of transmission ratio, R, corresponding to a plurality of values of basis weight, BW, without simulated dirt in the radiation path;

b) determining the coefficients of a first equation fitted to the values of BW and a function of the values of R representing the first curve with BW on the first axis and R on the second axis;

c) determining the values of R corresponding to a plurality of values of BW, with simulated dirt in the radiation path;

d) determining the coefficients of a second equation fitted to values of BW and a function of the values of R representing the second curve with BW on the first axis and R on the second axis;

e) determining a plurality of points on the standardization curve representing the difference between the first curve and the second curve;

f) operating the gauge to measure the weight per unit area of the sheet material by determining the measured transmission ratio;

g) standardizing the gauge during operation by:

i) placing the standard means in the gap without the sheet material in the gap and determining the standardize transmission ratio;

ii) determining the correction factor based upon the standardize transmission ratio; and

iii) applying the correction factor to the uncorrected basis weight to determine a corrected basis weight, the standardizing step including determining the correction factor based upon the value of the standardization curve at the point corresponding to the measured transmission ratio.

6. A system for standardizing a basis weight gauge measuring the weight per unit area of a sheet material, such gauge having a radiation source and radiation detector with a gap therebetween for directing radiation along a path towards said material and for detecting the amount of radiation transmitted through said material, said transmitted radiation being a measure of the basis weight of said material, said gauge also including standard means having a predetermined and stable basis weight and movable to be interposed in said radiation path, said system comprising:

a) means for constructing two calibration curves each showing basis weight on a first axis versus transmission ratio on a second axis, the first calibration curve being constructed without simulated dirt and the second calibration curve being constructed with simulated dirt;

b) means for constructing a standardization curve by plotting the displacement of one calibration curve relative to the other;

c) means for placing the standard means in the gap without the sheet material in the gap and determining a standardize transmission ratio; and

d) means for measuring transmitted radiation with sheet material in the gap and without the sheet material in the gap and means to determine a measured transmission ratio based upon said measurements; said system being characterized in that it further comprises:

e) means for determining a correction factor based upon the value of the standardization curve at a point corresponding to the measured transmission ratio; and

f) means for applying the correction factor to the uncorrected basis weight to determine a corrected basis weight.

7. A system according to Claim 6, characterized in that it comprises:

a) a plurality of reference samples each having a measured basis weight;

b) means for sequentially placing said reference samples in said gap and obtaining measurements of the radiation transmitted through said samples;

c) means for constructing the first calibration curve from said measurement of said samples, said curve relating the variable, basis weight on a first axis as a function of the transmission ratio on the second axis;

d) means for constructing the second calibration curve by sequentially placing said reference samples and material simulating dirt in said gap and measuring the transmitted radiation;

e) means for placing said standard in said gap with said material simulating dirt and without said material simulating dirt and measuring the transmitted radiation in each case;

f) means for constructing the standardization curve representing the difference between the first calibration curve and the second calibration curve as a function of the transmission ratio;

g) means for placing the sheet material in the gap and measuring the transmitted radiation and removing the sheet material and measuring the radiation to determine a measured transmission ratio and an uncorrected basis weight;

h) said means for placing the standard means in the gap without the sheet material in the gap and determining the standardize transmission ratio;

i) said means for determining the correction factor, C, based upon the value of the standardization curve at a point corresponding to the measured transmission ratio; and

j) said means for applying the correction factor to the uncorrected basis weight to determine the corrected basis weight.

8. A system according to Claim 7, including means to determine correction factor C by:

a) applying the standardize transmission ratio to the standardization curve to determine the corresponding $\Delta BW$;

b) calculating a DFRAC value according to the following:

$$DFRAC = \frac{\ln(FN) - \ln(FC)}{\ln(FD) - \ln(FC)}$$

where:

FN = the standardize transmission ratio

FC = the transmission ratio with the standard in the gap and without the material simulating dirt measured during calibration

FD = the transmission ratio with the standard and with the material simulating dirt in the gap, measured during calibration.

c) calculating C according to:

$$C = DFRAC\,(\Delta BW)$$

**Patentansprüche**

1. Verfahren zum Standardisieren eines Basisgewichtsmessers zur Messung des Gewichtes je Flächeneinheit eines blattförmigen Materials mit einer Strahlungsquelle und einem Strahlungsdetektor, zwischen denen ein Spalt ausgebildet ist, um eine Strahlung längs einer Bahn in Richtung auf das Material zu lenken und die Größe einer durch das Material hindurchgelassenen Strahlung wahrzunehmen, die ein Maß für das Basisgewicht des Materials ist, sowie mit einer Eichung dienenden Hilfsmitteln, die ein vorbestimmtes und stabiles Basisgewicht aufweisen und derart bewegbar sind, daß sie in die Bahn der Strahlung eingeschoben werden, wobei die folgenden Schritte ausgeführt werden, nämlich:

a) zwei Eichkurven konstruiert werden, die auf einer ersten Achse ein Basisgewicht gegen eine Funktion eines Durchlässigkeits-Verhältnisses auf einer zweiten Achse zeigen, wobei die erste Eichkurve ohne nachgebildeten Staub und die zweite Kurve mit nachgebildetem Staub aufgestellt ist,

b) eine Standardisierungskurve in der Weise konstruiert wird, daß die Versetzung der einen Eichkurve relativ zu der anderen aufgezeichnet wird, gekennzeichnet durch die weiteren, folgenden Schritte:

c) den Messer zum Messen des Gewichtes je Flächeneinheit des blattförmigen Materials in der Weise zu betreiben, daß ein gemessenes Durchlässigkeits-Verhältnis bestimmt wird,

d) während eines Betriebes den Messer zu standardisieren, indem ein Korrekturfaktor bestimmt wird, der auf dem Wert der Standardisierungskurve an einem Punkt beruht, der dem gemessenen Durchlässigkeits-Verhältnis entspricht.

2. Verfahren gemäß Anspruch 1, dadurch gekennzeichnet, daß der Punkt, der dem gemessenen Durchlässigkeits-Verhältnis entspricht, der Wert der Standardisierungskurve mit dem negativen natürlichen Logarithmus des gemessenen Durchlässigkeits-Verhältnisses ist.

3. Verfahren gemäß Anspruch 1 oder 2, gekennzeichnet durch die folgenden Schritte:

a) mehrere Bezugsproben vorzusehen, die jeweils ein gemessenes Basisgwicht aufweisen,

b) der Reihe nach die Bezugsproben in den Spalt zu legen und Meßwerte der durch die Proben hindurchgelassenen Strahlung zu erhalten,

c) aus den Meßwerten der Proben die erste Eichkurve zu konstruieren, die mit dem veränderbaren Basisgewicht längs der ersten Achse als Funktion des Durchlässigkeits-Verhältnisses längs der zweiten Achse in Beziehung steht,

d) die zweite Eichkurve zu konstruieren, indem nacheinander die Bezugsproben und ein Staub nachbildendes Material in den Spalt gelegt werden und die hindurchgelassene Strahlung gemessen wird,

e) die einer Eichung dienenden Hilfsmittel mit dem Staub nachbildenden Material und ohne das Staub nachbildende Material in den Spalt zu legen und in jedem Fall die hindurchgelassene Strahlung zu messen,

f) eine Standardisierungskurve auszuarbeiten, die die Differenz zwischen der ersten und zweiten Eichkurve wiedergibt,

g) die einer Eichung dienenden Hilfsmittel ohne das blattförmige Material in den Spalt zu legen und ein standardisiertes Durchlässigkeits-Verhältnis zu bestimmen,

h) das blattförmige Material in den Spalt zu legen und die hindurchgelassene Strahlung zu messen und das blattförmige Material zu entfernen und die Strahlung zu messen, um ein gemessenes Durchlässigkeits-Verhältnis und ein unkorrigiertes Basisgewicht zu bestimmen,

i) den Korrekturfaktor C zu bestimmen, der auf dem standardisierten Durchlässigkeits-Verhältnis und auf dem Wert der Standardisierungskurve an dem Punkt beruht, der dem gemessenen Durchlässigkeits-Verhältnis entspricht, und

j) den Korrektorfaktor auf das unkorrigierte Basisgewicht anzuwenden, um ein korrigiertes Basisgewicht zu bestimmen.

4. Verfahren gemäß Anspruch 3, dadurch gekennzeichnet, daß der Korrekturfaktor C dadurch bestimmt wird, daß

a) zur Bestimmung der entsprechenden Basisgewichts-Differenz $\Delta BW$ das standardisierte Durchlässigkeits-Verhältnis auf die Standardisierungskurve angewendet wird,

b) ein Wert DFRAC gemäß der folgenden Gleichung errechnet wird:

$$DFRAC = \frac{\ln(FN) - \ln(FC)}{\ln(FD) - \ln(FC)}$$

in der

FN das standardisierte Durchlässigkeits-Verhältnis,

FC das während einer Eichung gemessene Durchlässigkeits-Verhältnis mit dem Standard in dem Spalt und ohne das Staub nachbildende Material,

FD das Druchlässigkeits-Verhältnis mit dem Standard und mit dem Staub nachbildenden Material in dem Spalt bedeuten, das während einer Eichung gemessen wird, und

c) der Korrekturfaktor C gemäß der Gleichung errechnet wird:

$$C = DFRAC\,(\Delta BW).$$

5. Verfahren gemäß Anspruch 1, dadurch gekennzeichnet, daß es die folgenden Schritte aufweist:

a) entsprechend mehreren Werten des Basisgewichtes BW die Werte eines Durchlässigkeits-Verhältnisses R ohne nachgebildetem Staub in der Strahlungsbahn zu bestimmen,

b) die Koeffizienten einer ersten für die Werte eines Basisgewichtes BW geeigneten Gleichung und eine Funktion der Werte eines Durchlässigkeits-Verhältnisses R zu bestimmen, wobei die erste Kurve mit dem Basisgewicht BW auf der ersten Achse und dem Durchlässigkeits-Verhältnis R auf der zweiten Achse wiedergegeben wird,

c) bei nachgebildetem Staub in der Strahlungsbahn die Werte eines Durchlässigkeits-Verhältnisses R entsprechend mehreren Werten eines Basisgewichtes BW zu bestimmen,

d) die Koeffizienten einer zweiten für die Werte des Basisgewichtes BW geeigneten Gleichung und eine Funktion der Werte des Durchlässigkeits-Verhältnisses R zu bestimmen, wobei die zweite Kurve mit dem Basisgewicht BW auf der ersten Achse und dem Durchlässigkeits-Verhältnis R auf der zweiten Achse wiedergegeben wird,

e) mehrere Punkte auf der Standardisierungskurve zu bestimmen, die die Differenz zwischen der ersten und zweiten Kurve darstellt,

f) den Messer zu betreiben, um das Gewicht je Flächeneinheit des blattförmigen Materials durch eine Bestimmung des gemessenen Durchlässigkeits-Verhältnisses zu messen,

g) während des Betriebes den Messer dadurch zu standardisieren, daß

i) die der Eichung dienenden Hilfsmittel in den Spalt ohne das blattförmige Material gelegt werden und das standardisierte Durchlässigkeits-Verhältnis bestimmt wird,

ii) den Korrekturfaktor bestimmt wird, das auf dem standardisierten Durchlässigkeits-Verhältnis beruht, und

iii) zur Festlegung eines korrigierten Basisgewichtes den Korrekturfaktor auf das unkorrigierte Basisgewicht anzuwenden, wobei zum Schritt des Standardisierens die Bestimmung des Korrekturfaktors gehört, der auf dem Wert der Standardisierungskurve am Punkt beruht, der dem gemessenen Durchlässigkeits-Verhältnis entspricht.

6. System zum Standardisieren eines Basisgewichtsmessers, der das Gewicht eines blattförmigen Materials je Flächeneinheit mißt und eine Strahlungsquelle und einen Strahlungsdetektor mit einem dazwischenliegenden Spalt aufweist, um Strahlung längs einer Bahn in Richtung auf das Material zu lenken und die Größe der durch das Material hindurchgelassenen Strahlung wahrzunehmen, die ein Maß für das Basisgewicht des Materials ist, ferner mit einer Eichung dienenden Hilfsmitteln von einem vorherbestimmten und stabilen Basisgewicht, die zum Einlegen in die Strahlungsbahn bewegbar sind, sowie mit:

a) Hilfsmitteln zur Konstruktion von zwei Eichkurven, die jeweils ein Basisgewicht auf einer ersten Achse gegen die Durchlässigkeits-Verhältnis auf einer zweiten Achse zeigen, wobei die ersten Eichkurve ohne nachgebildetem Staub und die zweite Eichkurve mit nachgebildetem Staub konstruiert ist,

b) Hilfsmitteln zur Konstruktion einer Standardisierungskurve in der Weise, daß die Versetzung der einen Eichkurve relativ zu der anderen aufgezeichnet wird,

c) Hilfsmitteln zum Einlgen der einer Eichung dienenden Hilfsmittel in den Spalt ohne das blattförmige Material und zum Bestimmen eines standardisierten Durchlässigkeits-Verhältnisses,

d) Hilfsmitteln zum Messen einer hindurchgelassenen Strahlung mit dem blattförmigen Material und ohne das blattförmige Material in dem Spalt und Hilfsmitteln zur Bestimmung eines gemessenen Durchlässigkeits-Verhältnisses, das auf den Messungen beruht, dadurch gekennzeichnet, daß das System ferner enthält:

e) Hilfsmittel zum Bestimmen eines Korrekturfaktors, der auf dem Wert der Standardisierungskurve an einem Punkt beruht, der dem gemessenen Durchlässigkeits-Verhältnis entspricht, und

f) Hilfsmittel zum Anbringen eines Korrekturfaktors an dem unkorrigierten Basisgewicht, um ein korrigiertes Basisgewicht festzulegen.

7. System gemäß Anspruch 6, dadurch gekennzeichnet, daß es enthält:

a) mehrere Bezugsproben, die jeweils ein gemessenes Basisgewicht aufweisen,

b) Hilfsmittel, um der Reihe nach die Bezugsproben in den Spalt zu legen und Meßwerte der durch die Proben hindurchgelassenen Strahlung zu erhalten,

c) Hilfsmittel zur Konstruktion der ersten Eichkurve aus den Meßwerten an den Proben, wobei sich die Kurve auf das veränderbare Basisgewicht längs einer ersten Achse als Funktion des Durchlässigkeits-Verhältnisses längs der zweiten Achse bezieht,

d) Hilfsmittel zur Konstruktion der zweiten Eichkurve in der Weise, daß der Reihe nach die Bezugsproben und Staub nachbildendes Material in den Spalt gelegt werden und die hindurchgelassene Strahlung gemessen wird,

e) Hilfsmittel zum Einlegen des der Eichung dienenden Hilfsmittels mit dem Staub nachbildenden Material und ohne das Staub nachbildende Material in den Spalt und zum Messen der in jedem Fall hindurchgelassenen Strahlung,

f) Hilfsmittel zur Konstruktion der Standardisierungskurve, die die Differenz zwischen der ersten Eichkurve und der zweiten Eichkurve als Funktion des Durchlässigkeits-Verhältnisses wiedergibt,

g) Hilfsmittel zum Einlegen des blattförmigen Materials in den Spalt und zum Messen der hindruchgelassenen Strahlung und zum Enfernen des blattförmigen Materials und zum Messen der Strahlung, um ein gemessenes Durchlässigkeits-Verhältnis und ein unkorrigiertes Basisgewicht zu bestimmen,

h) Hilfsmittel zum Einlegen der einer Eichung dienenden Hilfsmittel ohne das blattförmige Material in den Spalt und zum Bestimmen des standardisierten Durchlässigkeits-Verhältnisses,

i) Hilfsmittel zum Festlegen des Korrekturfaktors C, der auf dem Wert der Standardisierungskurve an einem Punkt beruht, der dem gemessenen Durchlässigkeits-Verhältnis entspricht, und

j) Hilfsmittel zum Anbringen des Korrekturfaktors an dem unkorrigierten Basisgewicht, um das korrigierte Basisgewicht festzulegen.

8. System gemäß Anspruch 7 mit Hilfsmitteln zur Bestimmung des Korrekturfaktors, indem:

a) das standardisierte Durchlässigkeits-Verhältnis auf die Standardisierungskurve angewendet wird, um den entsprechenden Wert der Basisgewichtsdifferenz ΔBW zu bestimmen,

b) ein Wert DFRAC gemäß der folgenden Gleichung errechnet wird:

$$DFRAC = \frac{\ln(FN) - \ln(FC)}{\ln(FD) - \ln(FC)},$$

in der:

FN das standardisierte Durchlässigkeits-Verhältnis,

FC das Durchlässigkeits-Verhältnis mit dem einer Eichung dienenden Hilfsmittel in dem Spalt und ohne das Staub nachbildende Material, das während einer Eichung gemessen wird,

FD das Durchlässigkeits-Verhältnis mit dem einer Eichung dienenden Hilfsmittel und mit dem Staub nachbildenden Material in dem Spalt, was während einer Eichung gemessen wird, und

c) der Korrekturfaktor C nach der folgenden Gleichung errechnet wird:

$$C = DFRAC \, (\Delta BW).$$

**Revendications**

1. Procédé pour la standardisation d'un dispositif de mesure de poids de base pour mesurer le poids par unité de surface d'un matériau en feuille, un tel dispositif de mesure ayant une source de rayonnement et un détecteur de rayonnement avec une fente entre les deux pour envoyer le rayonnement suivant une trajectoire vers ledit matériau et pour détecter le montant de rayonnement transmis à travers ledit matériau, ledit rayonnement transmis étant une mesure du poids de base dudit matériau, ledit dispositif de mesure comportant aussi des moyens étalon ayant un poids de base stable déterminé d'avance et mobiles pour être interposés dans ladite trajectoire de rayonnement, ledit procédé comprenant les étapes suivantes:

a) construire deux courbes d'étalonnage montrant chacune le poids de base sur un premier axe par rapport à une fonction du taux de transmission sur un deuxième axe, la première courbe d'étalonnage étant construite sans impuretés simulées et la deuxième courbe d'étalonnage étant construite avec impuretés simulées;

b) construire une courbe de standardisation en traçant le déplacement d'une courbe d'étalonnage par rapport à l'autre; ce procédé étant caractérisé en ce qu'il comprend en outre les étapes suivantes;

c) faire fonctionner le dispositif de mesure pour mesurer le poids par unité de surface du matériau en feuille, en déterminant un taux de transmission mesuré;

d) standardiser le dispositif de mesure au cours du fonctionnement, l'étape de standardisation comportant la détermination d'un facteur de correction, basé sur la valeur de la courbe de standardisation en un point correspondant au taux de transmission mesuré.

2. Procédé selon la revendication 1, caractérisé en ce que le point correspondant au taux de transmission mesuré est la valeur de la courbe de standardisation à l'opposé du logarithme népérien du taux de transmission mesuré.

3. Procédé selon l'une ou l'autre des revendications 1 et 2, caractérisé en ce qu'il comprend les étapes suivantes:

a) prévoir une pluralité d'échantillons de référence ayant chacun un poids de base mesuré;

b) placer séquentiellement lesdits échantillons de référence dans ladite fente et obtenir des mesures du rayonnement transmis à travers lesdits échantillons;

c) construire la première courbe d'étalonnage à partir desdites mesures desdits échantillons, ladite courbe établissant la variable, poids de base, sur un premier axe en fonction du taux de transmission, sur le deuxième axe;

d) construire la deuxième courbe d'étalonnage en plaçant séquentiellement lesdits échantillons de référence et ledit matériau simulant des impuretés dans ladite fente et en mesurant le rayonnement transmis;

e) placer lesdits moyens étalon dans ladite fente avec ledit matériau simulant des impuretés et sans ledit matériau simulant des impuretés et mesurer le rayonnement transmis dans chaque cas;

f) construire la courbe de standardisation représentant la différence entre la première courbe d'étalonnage et la deuxième courbe d'étalonnage;

g) placer les moyens étalon dans la fente, sans le matériau en feuille dans la fente et déterminer un taux de transmission standardisé;

h) placer le matériau en feuille dans la fente, mesurer le rayonnement transmis, ôter le matériau en feuille et mesurer le rayonnement, pour déterminer un taux de transmission mesuré et un poids de base non corrigé;

i) déterminer le facteur de correction, C, basé sur le taux de transmission standardisé et sur la valeur de la courbe de standardisation au point correspondant au taux de transmission mesuré; et

j) appliquer le facteur de correction au poids de base non corrigé pour déterminer un poids de base corrigé.

4. Procédé selon la revendication 3, caractérisé en ce que le facteur de correction C est déterminé par:

a) application du taux de transmission standardisé à la courbe de standardisation, pour déterminer la valeur correspondante ΔPB;

b) calcul d'une valeur DFRAC selon ce qui suit:

$$DFRAC = \frac{\ln(FN) - \ln(FC)}{\ln(FD) - \ln(FC)}$$

où:

FN = taux de transmission standardisé

FC = taux de transmission avec l'étalon dans la fente et sans le matériau simulant des impuretés, mesuré au cours de l'étalonnage

FD = taux de transmission avec l'étalon et avec le matériau simultant des impuretés dans la fente, mesuré au cours de l'étalonnage.

c) calcul de C selon:

$$C = DFRAC (\Delta PB)$$

5. Procédé selon la revendication 1, caractérisé en ce qu'il comprend les étapes suivantes:

a) déterminer les valeurs du taux de transmission, R, correspondant à une pluralité de valeurs du poids de base, PB, sans impuretés simulées dans la trajectoire de rayonnement;

b) déterminer les coefficients d'une première équation ajustée aux valeurs de PB et une fonction des valeurs de R représentant la première courbe, avec PB sur le premier axe et R sur le deuxième axe;

c) déterminer les valsurs de R correspondant à une pluralité de valeurs de PB, avec impuretés simulées dans la trajectoire de rayonnement;

d) déterminer les coefficients d'une deuxième équation ajustée à des valeurs de PB et une fonction des valeurs de R représentant la deuxième courbe, avec PB sur le premier axe et R sur le deuxième axe;

e) déterminer une pluralité de points sur la courbe de standardisation représenant la différence entre la première courbe et la deuxième courbe;

f) faire fonctionner le dispositif de mesure pour mesurer le poids par unité de surface du matériau en feuille, en déterminant le taux de transmission mesuré;

g) standardiser le dispositif de mesure au cours du fonctionnement par:

i) placement des moyens étalon dans la fente, sans le matériau en feuille dans la fente et détermination du taux de transmission standardisé;

ii) détermination du facteur de correction basé sur le taux de transmission standardisé; et

iii) application du facteur de correction au poids de base non corrigé, pour déterminer un poids de base corrigé, l'étape de standardisation comportant la détermination du facteur de correction basé sur la valeur de la courbe de standardisation au point correspondant au taux de transmission mesuré.

6. Système pour standardiser un dispositif de mesure de poids de base mesurant le poids par unité de surface d'un matériau en feuille, un tel dispositif de mesure ayant une source de rayonnement et un détecteur de rayonnement avec une fente entre les deux pour envoyer le rayonnement suivant une trajectoire vers ledit matériau et pour détecter le montant de rayonnement transmis à travers ledit matériau, ledit rayonnement transmis étant une mesure du poids de base dudit matériau, ledit dispositif de mesure comportant aussi des moyens étalon ayant un poids de base stable déterminé d'avance et mobiles pour être interposés dans ladite trajectoire de rayonnement, ledit système comprenant:

a) des moyens pour construire deux courbes d'étalonnage montrant chacune le poids de base sur un premier axe par rapport au taux de transmission sur un deuxième axe, la première courbe d'étalonnage étant construite sans impuretés simulées et la deuxième courbe d'étalonnage étant construite avec impuretés simulées;

b) des moyens pour construire une courbe de standardisation en traçant le déplacement d'une courbe d'étalonnage par rapport à l'autre;

c) des moyens pour placer les moyens étalon dans la fente, sans le matériau en feuille dans la fente et déterminer un taux de transmission standardisé; et

d) des moyens pour mesurer le rayonnement transmis avec le matériau en feuille dans la fente et sans le matériau en feuille dans la fente et des moyens pour déterminer un taux de transmission mesuré, basé sur lesdites mesures; ledit système étant caractérisé en ce qu'il comprend en outre:

e) des moyens pour déterminer un facteur de correction, basé sur la valeur de la courbe de standardisation en un point correspondant au taux de transmission mesuré; et

f) des moyens pour appliquer le facteur de correction au poids de base non corrigé, pour déterminer un poids de base corrigé.

7. Système selon la revendication 6, caractérisé en ce qu'il comprend:

a) une pluralité d'échantillons de référence ayant chacun un poids de base mesuré;

b) des moyens pour placer séquentiellement lesdits échantillons de référence dans ladite fente et pour obtenir des mesures du rayonnement transmis à travers lesdits échantillons;

c) des moyens pour construire la première courbe d'étalonage à partir desdites mesures desdits échantillons, ladite courbe établissant la variable, poids de base, sur un premier axe en fonction du taux de transmission, sur le deuxième axe;

d) des moyens pour construire la deuxième courbe d'étalonnage en plaçant séquentiellement lesdits échantillons de référence et ledit matériau simulant des impuretés dans ladite fente et en mesurant le rayonnement transmis;

e) des moyens pour placer ledit étalon dans ladite fente avec ledit matériau simulant des impuretés et sans ledit matériau simulant des impuretés et pour mesurer le rayonnement transmis dans chaque cas;

f) des moyens pour construire la courbe de standardisation représentation la différence entre la première courbe d'étalonnage et la deuxième courbe d'étalonnage, en fonction du taux de transmission;

g) des moyens pour placer le matériau en feuille dans la fente, mesurer le rayonnement transmis, ôter le matériau en feuille et mesurer le rayonnement, pour déterminer un taux de transmission mesuré et un poids de base non corrigé;

h) lesdits moyens pour placer les moyens étalon dans la fente, sans le matériau en feuille dans la fente et déterminer le taux de transmission standardisé;

i) lesdits moyens pour déterminer le facteur de correction, C, basé sur la valeur de la courbe de standardisation en un point correspondant au taux de transmission mesuré; et

j) lesdits moyens pour appliquer le facteur de correction au poids de base non corrigé, pour déterminer le poids de base corrigé.

8. Système selon la revendication 7, comportant des moyens pour déterminer le facteur de correction C par:

a) application du taux de transmission standardisé à la courbe de standardisation, pour déterminer la valeur correspondante ΔPB;

b) calcul d'une valeur DFRAC selon ce qui suit:

$$DFRAC = \frac{\ln(FN) - \ln(FC)}{\ln(FD) - \ln(FC)}$$

où:

FN=taux de transmission standardisé

FC=taux de transmission avec l'étalon dans la fente et sans le matériau simulant des impuretés, mesuré au cours de l'étalonnage

FD=taux de transmission avec l'étalon et avec le matériau simulant des impuretés dans la fente, mesuré au cours de l'étalonnage.

c) calcul de C selon:

$$C = DFRAC \, (\Delta PB).$$

FIG. 1

FIG. 2